# EUROPEAN PATENT SPECIFICATION

(11) **EP 4 038 570 B1**
(45) Date of publication and mention of the grant of the patent: **25.03.2026**
(21) Application number: 19816205.9
(22) Date of filing: 24.10.2019
(51) Int. Cl.: G06T 5/60, G06T 7/50, G06T 5/50

(54) **DOMAIN ADAPTATION FOR DEPTH DENSIFICATION**
DOMÄNENANPASSUNG FÜR TIEFENVERDICHTUNG
ADAPTATION DE DOMAINE POUR UNE DENSIFICATION DE PROFONDEUR

(43) Date of publication of application: 10.08.2022
(73) Proprietor: Huawei Technologies Co., Ltd., Longgang District Shenzhen, Guangdong 518129 (CN)
(72) Inventor: BUSAM, Benjamin, 80992 Munich (DE); SLABAUGH, Gregory, 80992 Munich (DE); LEONARDIS, Ales, 80992 Munich (DE); LOPEZ RODRIGUEZ, Adrian, 80992 Munich (DE)
(74) Representative: Epping - Hermann - Fischer
(86) International application number: PCT/EP2019/079001
(87) International publication number: WO 2021/078385

(56) References cited:
- AMIR ATAPOUR-ABARGHOUEI ET AL: "Veritatem Dies Aperit- Temporally Consistent Depth Prediction Enabled by a Multi-Task Geometric and Semantic Scene Understanding Approach", ARXIV.ORG, CORNELL UNIVERSITY LIBRARY, 201 OLIN LIBRARY CORNELL UNIVERSITY ITHACA, NY 14853, 26 March 2019 (2019-03-26), XP081158072
- FREDRIK K GUSTAFSSON ET AL: "Evaluating Scalable Bayesian Deep Learning Methods for Robust Computer Vision", ARXIV.ORG, CORNELL UNIVERSITY LIBRARY, 201 OLIN LIBRARY CORNELL UNIVERSITY ITHACA, NY 14853, 4 June 2019 (2019-06-04), XP081373002
- JIAXIONG QIU ET AL: "DeepLiDAR: Deep Surface Normal Guided Depth Prediction for Outdoor Scene from Sparse LiDAR Data and Single Color Image", ARXIV.ORG, CORNELL UNIVERSITY LIBRARY, 201 OLIN LIBRARY CORNELL UNIVERSITY ITHACA, NY 14853, 3 December 2018 (2018-12-03), XP081199862
- AMIR ATAPOUR-ABARGHOUEI ET AL: "To complete or to estimate, that is the question: A Multi-Task Approach to Depth Completion and Monocular Depth Estimation", ARXIV.ORG, CORNELL UNIVERSITY LIBRARY, 201 OLIN LIBRARY CORNELL UNIVERSITY ITHACA, NY 14853, 15 August 2019 (2019-08-15), XP081463109

## Description

### TECHNICAL FIELD

This disclosure relates to image processing: for example processing image data and relatively sparse depth data to form denser depth data, and training models to perform such processing.

### BACKGROUND

Sensing technologies such as RADAR, LiDAR, ultrasound or other time-of-flight techniques utilize the fact that a wave with known properties is emitted and then reflected back from objects with specific density characteristics. If the travelling speed of the wave and the environmental characteristics are known, the echo or the reflection can be used to determine the time the wave took to travel through a medium and then the distance to the points that made the signal reflect can be calculated. Depending on the technology, these waves may be electromagnetic or acoustic. The waves may be sent at various frequencies.

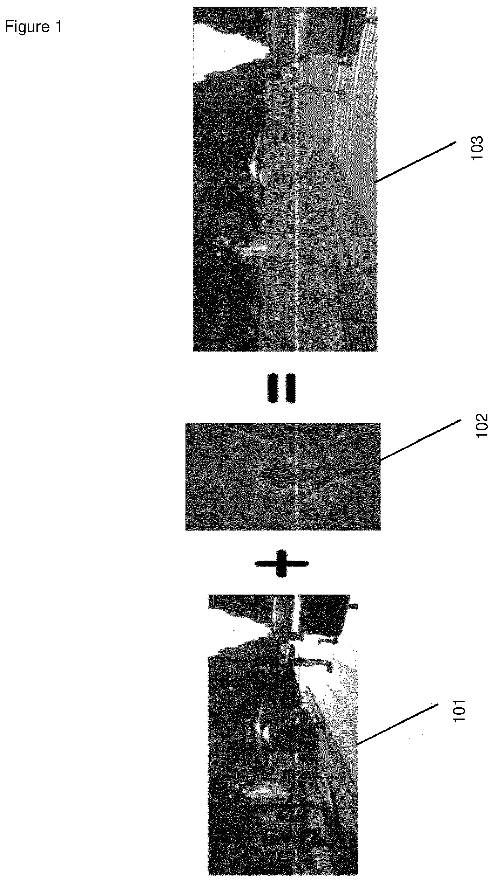

While many sensors of this kind, such as LiDAR, can be used to determine the distance of objects within a specified range quite accurately, they retrieve a relatively sparse sampling of the environment in particular if the scanned objects are further away from the sensor. Put another way, the data they provide about the depths of objects from a sensing point are discrete and there are significant gaps between the vectors along which depth data is provided. Comparing the distance measurements of the sparse depth sensor to a passively acquired optical sensor, the effect becomes apparent. Figure 1 illustrates a scenario for the LiDAR case where an RGB image is used as a reference and the distances measured are projected onto the image, as described in Geiger, Andreas, Philip Lenz, and Raquel Urtasun, "Are we ready for autonomous driving? The kitti vision benchmark suite", 2012 IEEE Conference on Computer Vision and Pattern Recognition (CVPR 2012). The RGB image shown at 101 (the image is rendered in grayscale in this figure) is acquired from a camera mounted on the roof top of a car close to a LiDAR scanner that rotates 360 degrees to acquire the data shown at 102 (bird's eye view). After projection of the acquired distances onto the RGB view, as shown at 103, the sparsity of the signal becomes apparent.

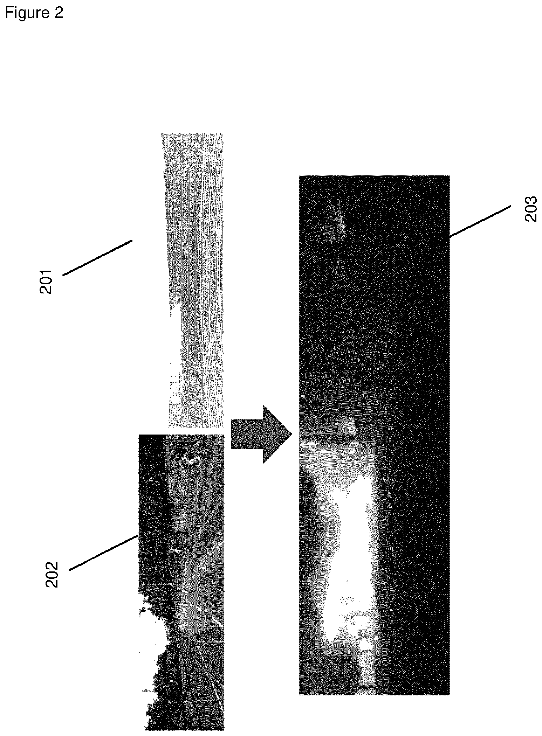

Many computer vision applications can benefit from knowledge of depth with reduced sparsity. In order to derive the depth in all pixels of the RGB image (or at least more pixels than the subset for which actual measurements are available), information from the original RGB image can be combined with the relatively sparse depth measurements from, for example, LiDAR, and a full resolution depth map can be estimated. This task is commonly known as depth completion. Figure 2 shows an example of a generic depth completion pipeline. Figure 2 shows the effect of a generic depth completion pipeline.

It is known to train a deep neural network to perform depth completion, with the training being supervised from real ground truth data or with self-supervision from additional modalities or sensors such as a second camera, an inertial measurement unit or consecutively acquired video frames. (Self-supervision refers to a training of a neural network in the absence of an explicit ground truth supervision). This approach has the advantage that the sensed data is naturally representative of what can be expected in a real world application but it suffers from problems such as noisy data and the cost of data acquisition.

It is desirable to develop a system and method for training a depth estimator that at least partially addresses these problems.

AMIR ATAPOUR-ABARGHOUEI ET AL: "Veritatem Dies Aperit - Temporally Consistent Depth Prediction Enabled by a Multi-Task Geometric and Semantic Scene Understanding Approach" presents a multi-task learning-based approach capable of jointly performing geometric and semantic scene understanding, namely depth prediction (monocular depth estimation and depth completion) and semantic scene segmentation. The depth prediction is considered as a supervised image-to-image translation problem, wherein an input RGB image (for depth estimation) or RGB-D image (with the depth channel containing holes for depth completion) is translated to a complete depth image.

FREDRIK K GUSTAFSSON ET AL: "Evaluating Scalable Bayesian Deep Learning Methods for Robust Computer Vision" presents a comprehensive evaluation framework for scalable epistemic uncertainty estimation methods in deep learning. The proposed framework employs state-of-the-art DNN models on the tasks of depth completion and street-scene semantic segmentation. For evaluating depth completion methods, the KITTI (Karlsruhe Institute of Technology and Toyota Technological Institute) depth completion and Virtual KITTI datasets are utilized.

JIAXIONG QIU ET AL: "DeepLiDAR: Deep Surface Normal Guided Depth Prediction for Outdoor Scene from Sparse LiDAR Data and Single Color Image" presents an end-to-end deep learning system to produce dense depth from sparse LiDAR (Light Detection and Ranging) data and a color image taken from outdoor on-road scenes leveraging surface normal as the intermediate representation. The deep learning framework consists of a color pathway and a surface normal pathway. The depths from two pathways are then integrated by a learned weighted sum to produce the final complete depth.

### SUMMARY

According to one aspect there is provided a method for training an environmental analysis system, the method comprising: receiving a data model of an environment; forming in dependence on the data model a first training input comprising a visual stream representing the environment as viewed from a plurality of locations; forming in dependence on the data model a second training input comprising a depth stream representing the depth of objects in the environment relative to the plurality of locations; forming a third training input comprising a depth stream representing the depth of objects in the environment relative to the plurality of locations, the third training input being sparser than the second training input; and estimating by means of the analysis system, in dependence on the first and third training inputs, a series of depths at less sparsity then the third training input; and adapting the analysis system in dependence on a comparison between the estimated series of depths and the second training input.

The data model is a synthetic data model, e.g. of a synthetic environment. Thus, the steps of forming the first training input and the second training input may comprise inferring those inputs in a self-consistent manner based on the environment as defined by the data model. By using synthetic data to train the model the efficiency and effectiveness of training may be improved.

The analysis system is a machine learning system having a series of weights and the step of adapting the analysis system may comprise adapting the weights. The use of a machine learning system can assist in forming a model that provides good results on real-world data.

The third training input may be filtered and/or augmented to simulate data resulting from a physical depth sensor. This can improve the effectiveness of the resulting model on real world data.

The third training input may be filtered and/or augmented to simulate data resulting from a scanning depth sensor. This can improve the effectiveness of the resulting model on real world data.

The third training input may be filtered and/or augmented by adding noise. This can improve the effectiveness of the resulting model on real world data.

The method may comprise forming the third training input by filtering and/or augmenting the second training input. This can provide an efficient way to generate the third training input.

The second training input and the third training input may represent depth maps. This can assist in forming a model that is effective on real-world depth map data.

The third training input may be augmented to preferentially include, for each of the plurality of locations, depth data for vectors extending at a common angle to vertical from the respective location. This can help to mimic the data derived from a scanning sensor.

The third training input may be filtered by preferentially excluding data for vectors that extend from one of the locations to an object that has been determined to be at a greater or smaller depth further away from an estimate than a predetermined threshold. This can help to mimic the data derived from a real-world sensor.

The third training input may be filtered by excluding data for vectors in dependence on the colour represented in the visual stream of an object towards which the respective vectors extend. This can help to mimic the data derived from a real-world sensor.

The data model may be a model of a synthetic environment.

The method may comprise repeatedly adapting the analysis system. The method may comprise performing the majority of such adaptations in dependence on data describing one or more synthetic environments. This can provide an efficient way to train a model.

The step of training the system may comprise training the system by means of a semi-supervised learning algorithm. This can provide efficient training results.

The method may comprise training the system by the steps of: providing a view of the environment orientationally and translationally centred on a first reference frame as input to the system and in response to that input estimating by means of the system the depths associated with pixels in that view; forming, in dependence on that view and the estimated depths, an estimated view of the environment orientationally and translationally centred on a second reference frame different from the first reference frame; estimating the visual plausibility of the estimated view; and adjusting the system in dependence on that estimate. This can help to train the system efficiently.

The method may be performed by a computer executing code stored in a non-transient form. The code may be a stored computer program.

The method may comprise: sensing by an image sensor an image of a real environment; sensing by a depth sensor a first depth map of the real environment, the first depth map having a first sparsity; and forming by means of the system and in dependence on the image and the first depth map a second depth map of the real environment, the second depth map having less sparsity than the first depth map. This can help to augment the data from a real-world depth sensor in dependence on data from a real-world camera.

The method may comprise controlling a self-driving vehicle in dependence on the second depth map. This can help to improve the accuracy of the vehicle's driving.

According to a second aspect there is provided an environmental analysis system formed by a method as set out above.

According to a third aspect there is provided an environmental analysis engine comprising: an image sensor for sensing images of an environment; a time of flight depth sensor; and an environmental analysis system as set out in the preceding paragraph; the environmental analysis system being arranged to receive images sensed by the image sensor and depths sensed by the depth sensor and thereby form estimates of the depths of objects depicted in the images.

According to a fourth aspect there is provided a self-driving vehicle comprising an environmental analysis engine as set out in the preceding paragraph, the vehicle being configured to drive in dependence on the estimates of the depths of objects depicted in the images.

According to a fifth aspect there is provided a cellular communications terminal comprising an environmental analysis engine as set out in the third aspect.

### BRIEF DESCRIPTION OF THE DRAWINGS

The present disclosure will now be made by way of example with reference to the accompanying drawings. In the drawings:
Figure 1 illustrates distance measurements made using a LiDAR Sensor.
Figure 2 shows the effect of a generic depth completion pipeline.
Figure 3 illustrates the domain gap between synthetic and real data.
Figure 3(a) shows a synthetically created rendering using a driving simulator.
Figure 3(b) shows a real driving scene.
Figure 4 illustrates geometric sensor imitation.
Figure 5 shows sensor-specific data patterns.
Figure 6 shows a stereo pair from driving.
Figure 7 shows a wrongly projected image.
Figure 8 illustrates an adversarial approach to correct with virtual projections.
Figure 9 shows a multi-modal sensing system on a vehicle.
Figure 10 shows a synthesized RGB image and its depth map.
Figure 11 illustrates depth sparsification with Bernoulli point dropping.
Figure 12 shows a projection of RGB from left to right.
Figure 13 illustrates a student-teacher training scheme.
Figure 14 shows a domain adaptation pipeline
Figure 15 shows an example of a camera configured to implement the methods described herein.
Figure 16 shows results on the synthetic domain.
Figure 17 shows results on real domain.
Figure 18 shows the results of a quantitative analysis and ablation study.

### DETAILED DESCRIPTION

The present description relates to training a machine learning system, otherwise known as an artificial intelligence model, to form a relatively dense depth map in dependence on a sparser or less dense depth map and an image (e.g. an RGB image) of a scene. A depth map is a set of data describing depths from a location to objects along a series of vectors extending at different directions from the location. If the depth map is derived directly from a real world sensor then the data may be depth measurements. Conveniently, the Al model can be trained using modern rendering engines and by formulating a pipeline that is fully trained on synthetic data without real ground truth or additional sensors. Then the trained model can be used to estimate depths from real data, for example in a self-driving or collision-avoiding vehicle or a smartphone.

A domain adaptation pipeline for sparse-to-dense depth image completion is fully trained on synthetic data without real ground truth (i.e. ground truth training data derived from real environmental sensing, for example by depth sensors for sensing real-world depth data) or additional sensors (e.g. a second camera or an inertial measurement unit (IMU)). While the pipeline itself is agnostic to the sparse sensor hardware, the system is demonstrated with the example of LiDAR data as commonly used in driving scenarios where an RGB camera together with other sensors is mounted on the roof of a car. The present system is usable in other scenarios.

Figure 1 illustrates that an RGB, black and white or greyscale image 101 of a scene can be processed together with a depth data of the scene 102 to produce a map 103 indicating the depths of objects in the scene from a given point. Figure 2 illustrates that an RGB, black and white or greyscale image 202 of a scene can be processed together with a relatively sparse depth map 201 of the scene to infer a more detailed depth map 203.

Domain adaptation is used to imitate real sensor noise. The solution described herein comprises four modules: geometric sensor imitation, data-driven sensor mimicking, semi-supervised consistency and virtual projections.

The present system can be trained using ground truth data derived exclusively from the synthetic domain, or can be used alongside self-supervised methods.

### Geometric Sensor Imitation

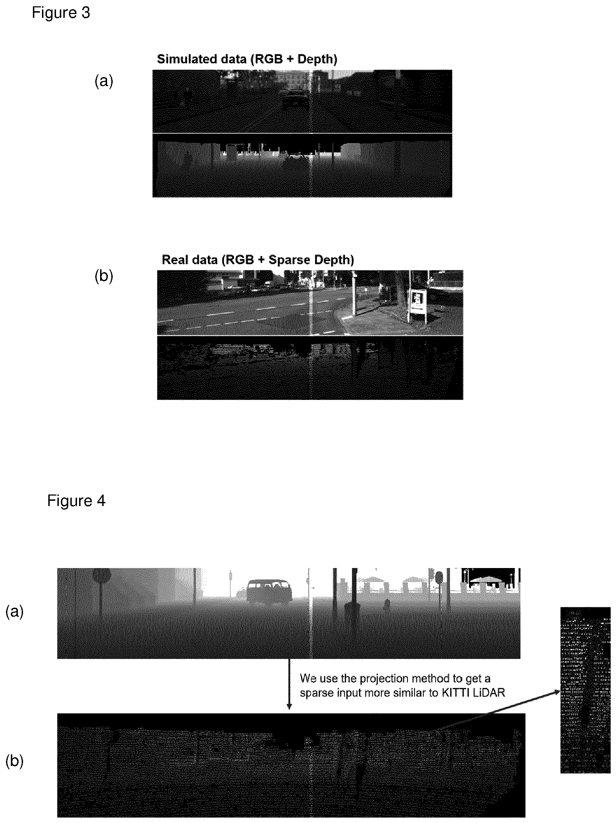

We differentiate the two domains for synthetically created images and real acquisitions as shown in Figure 3, which indicates the domain gap between synthetic and real data. A synthetically created pair consisting of an RGB image and a depth map can be retrieved densely in the synthetic domain while a LiDAR scanner that scans the surroundings creates a sparse signal if its 3D point cloud is projected onto the reference view of the RGB image. To create these, a synthetic environment can be modelled. Then an RGB image of that environment from a chosen viewpoint can be formed, along with a depth map from that viewpoint. For training purposes, the same can be repeated from multiple viewpoints to form a larger set of training data.

Figure 3a shows a synthetically created rendering using a driving simulator (Dosovitskiy, Alexey, German Ros, Felipe Codevilla, Antonio Lopez, and Vladlen Koltun. "CARLA: An open urban driving simulator." arXiv preprint arXiv:1711.03938 2017) with the RGB image on top and the intensity-coded depth map on the bottom (further away regions are brighter). Figure 3b shows a real driving scene (from Geiger, Andreas, Philip Lenz, and Raquel Urtasun. "Are we ready for autonomous driving? The kitti vision benchmark suite." 2012 IEEE Conference on Computer Vision and Pattern Recognition. CVPR 2012) with an RGB acquisition (top) and the projected LiDAR point cloud (bottom). While the synthetic depth data is dense, the LiDAR projection creates a sparse depth map on the RGB reference view.

The inherent domain gap is apparent to a human observer. The effectiveness of the Al model can be improved by imitating a real noise pattern on the virtual domain. In order to simulate the LiDAR pattern on the synthetic data, different sparsification approaches can be chosen. Past methods (e.g. Ma, Fangchang, and Sertac Karaman. "Sparse-to-dense: Depth prediction from sparse depth samples and a single image." 2018 IEEE International Conference on Robotics and Automation. ICRA 2018) draw with a probability p from a Bernoulli distribution independent of surrounding pixels. In the present system, we utilize the geometric information we have from the real scenario and in order to imitate the signal on the real domain. We virtually place the depth sensor at a similar relative spatial location (LiDAR reference) with respect to the RGB image as in the real domain. To imitate the sensor signal in its sparsity, we then reduce the sampling rate by using a binary projection mask on the LiDAR reference and project to the views we synthesize. The resulting synthesized sparse signal is visually much closer to the real domain than in at least some prior art approaches (c.f. Figure 4).

Figure 4 shows a virtual depth map (top image) created for a similar spatial location (LiDAR reference) to the RGB image. A real mask on the LiDAR reference is used for sampling. The projected point cloud on the RGB reference (lower part) is visually closer to the real domain than random sampling of the points (e.g. using a naïve Bernoulli sampling).

### Data-specific Sensor Imitation

The geometrically corrected sparse signal from the previous step is closer to the real domain than in at least some other synthetic approaches. However, it has been found that further processing to match the real distribution is beneficial. This can be done by modelling two further filters.

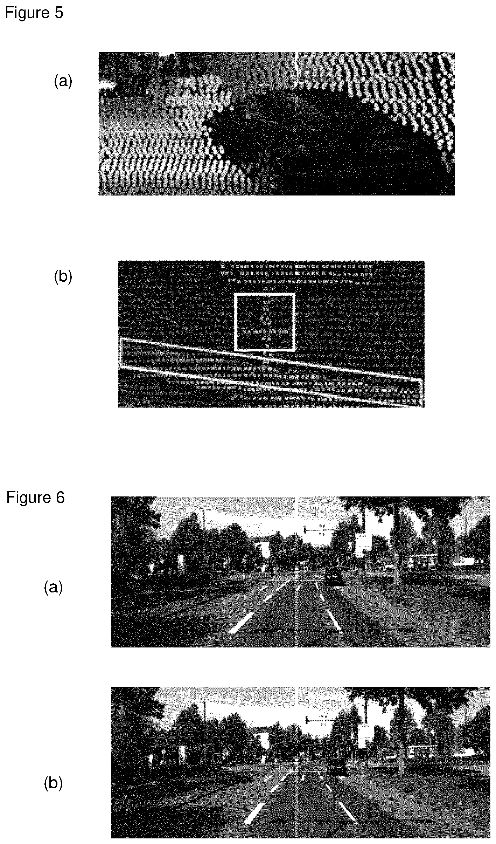

One effect is that in a real system dark areas are less reflective to the LiDAR signal and thus contain fewer 3D points. Another effect is that the rectification process induces depth ambiguities in self-occluded regions visible e.g. at thin structures. The LiDAR sensor can see beyond the RGB view and measures some objects in the "shadow" of thin structures. Due to the sparsity of the signal, these measurements do not necessarily coincide on one ray from the RGB view and thus appear simultaneously on its projection. Figure 5 illustrates both of these cases.

In Figure 5, on the top, the projection from a scene with a dark object (black car) is shown. While the LiDAR projection on the structures in the surroundings is homogeneous, the dark car has significantly fewer 3D measurements on its surface. On the image on the bottom (from Cheng, Xuelian, Yiran Zhong, Yuchao Dai, Pan Ji, and Hongdong Li. "Noise-Aware Unsupervised Deep Lidar-Stereo Fusion." CVPR 2019), the shadow of the pole (black region) is a cause of the LiDAR sensor being mounted to the right of the camera on which reference view we observe the projected points. The sparse sampling in the boxed regions shows depth ambiguities caused by the projection to the other reference where the points are actually occluded.

In order to mimic such sensor behaviour we enforce data cleaning on the real domain by removing the potentially misaligned and noisy sparse signals (as shown in Figure 5). We realize this by using a point dropping filter on the data with a hard threshold. If the difference between the predicted depth and the sparse input is larger than the specified value, we do not use the point for sparse supervision.

An additional selective sparsification process is performed on the synthetic domain, where points from the sparse input are deleted dependent on the RGB image. While a naïve approach to delete points would independently drop points given a specific dropping distribution, we learn a probability distribution for realistic point dropping on the synthetic domain. We use real LiDAR-RGB pairs to learn an RGB-conditioned model to drop points where it is more probable (e.g. on dark areas as shown in Figure 5).

Moreover, random point drops in the input LiDAR and consecutive recovering is used to provide a sparse supervision signal on the real domain.

### Virtual Projections

Most current models that train with self-supervision assume the presence of multiple available sensors. Usually a second RGB camera is used together with a photometric loss between two views - these could come from a physical left-right stereo pair or from consecutive frames in a video sequence in order to train a model that estimates depth.

Figure 6 illustrates two example images (top and bottom) from the KITTI dataset. Even though spatially placed at different locations, the scene content is very similar. (See Geiger, Andreas, Philip Lenz, and Raquel Urtasun. "Are we ready for autonomous driving? The kitti vision benchmark suite." 2012 IEEE Conference on Computer Vision and Pattern Recognition. CVPR 2012). Simultaneous acquisition has been done with two similar cameras that are spatially placed at different locations. The left RGB image is shown on the top in Figure 6(a), the right stereo image on the bottom in Figure 6(b).

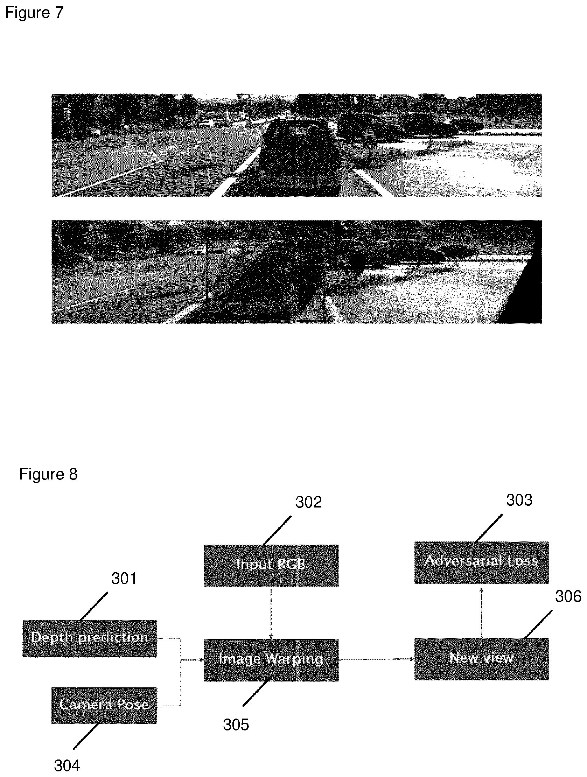

Given the depth map for the top image, for instance, one can project the RGB values onto the bottom image (or vice versa). As long as the dense depth map is correct, the resulting image will look very similar to the view from the left side despite view-dependent occlusions. However, in the case of wrong depth estimates, the errors become clearly visible as shown for example in Figure 7, where the correctly estimated areas such as the street and the signs do produce correct-looking image regions while the parts around the car in the middle create highly erroneous image content emphasizing the flying pixels in the free space around the depth discontinuities at the car edges.

We make use of the observation that projections unravel problematic depth regions by using synthesized new views together with an adversarial loss on the new view after warping. Thus, the adversarial method helps to align the projections from simulated and real data. While any camera pose can be used for the projection, no additional sensing is needed for this approach: Figure 8 illustrates the pipeline schematically. To further enhance the quality, the method can also be combined with view-consistency, for instance by cyclic consistency checks with back-projection to the origin.

Figure 8 shows an adversarial approach to correct with virtual projections. The depth prediction 301 on the RGB input (left) is used with an input camera pose (left) 304 to warp 305 the input RGB image (top) 302 to virtually create a new view 306 that is evaluated by an adversarial loss 303 to help aligning the problematic regions that can be penalized strongly after warping.

### Semi-supervised Consistency

One way to utilize domain adaptation and close domain gaps is by creating pseudo labels on the target domain. We achieve this by utilizing consistency with self-generated labels during training. A semi-supervised method is applied to the depth completion task by creating depth maps in the real domain that act as pseudo labels. We combine noisy pseudo predictions to pull our noisy model during training.

While there are multiple ways to realize semi-supervised consistency, in practice we follow the approach of Tarvainen and Valpola (Tarvainen, Antti, and Harri Valpola. "Mean teachers are better role models: Weight-averaged consistency targets improve semi-supervised deep learning results." NeurIPS 2017).

Put another way, we propose a domain adaptation pipeline for depth completion with the following notable stages:
1. Geometric sensor imitation
   ▪ Using the real-data pattern and projection of artefacts on the synthetic domain.
2. Data-specific sensor imitation
   ▪ Selective sparsification and data refinement.
3. Virtual projections of predictions to other views to reveal errors in prediction
   ▪ Change in perspective reveals incorrect depth. This observation is used with an adversarial loss.
4. Application of a semi-supervised approach to enforce consistency with self-generated depth maps
   ▪ A mean teacher is used for semi-supervised learning with sparse point supervision.

An implementation of this approach for the specific exemplar use case of RGB and LiDAR fusion in the context of driving scenes will now be described. For data generation we use the driving simulator CARLA (see Dosovitskiy, Alexey, German Ros, Felipe Codevilla, Antonio Lopez, and Vladlen Koltun. "CARLA: An open urban driving simulator." arXiv preprint arXiv:1711.03938 2017) and the real driving scenes from the KITTI dataset, as described in Geiger, Andreas, Philip Lenz, and Raquel Urtasun. "Are we ready for autonomous driving? The kitti vision benchmark suite." 2012 IEEE Conference on Computer Vision and Pattern Recognition. CVPR 2012.

### Sensor and Data Imitation

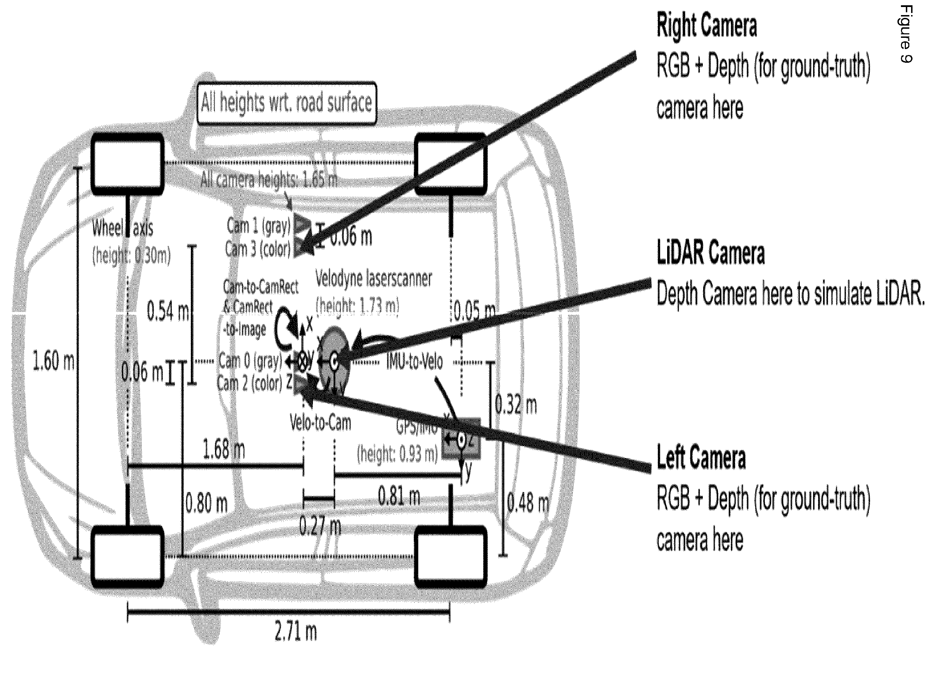

The KITTI dataset assumes an automobile equipped with multiple sensing systems as illustrated in Figure 9. We virtually place cameras in our simulation environment at the same relative spatial locations as the stereo camera pair and the sparse LiDAR sensor on the KITTI vehicle. For convenience we added this information to the graphical illustration.

Figure 9 shows a multi-modal sensing system on a vehicle (in this case a car). The car is equipped with multiple sensors at different spatial locations. The two stereo camera setups (Cam 0 - Cam 1 for greyscale imaging and Cam 2 - Cam 3 for RGB) are placed in front of a Velodyne LiDAR scanner between the car axes. An additional IMU / GPS module is held in the back of the car. We place the virtual cameras on the synthetic domain at the same relative locations as the RGB cameras indicated by the arrows.

While the ground truth data for the driving dataset (see Geiger, Andreas, Philip Lenz, and Raquel Urtasun. "Are we ready for autonomous driving? The kitti vision benchmark suite." 2012 IEEE Conference on Computer Vision and Pattern Recognition) is retrieved with an intense processing stage leveraging temporal and car pose information, our simulator can project the depth information of the environment onto the same frame of reference as the synthetic placement of the RGB cameras to retrieve ground truth supervision on the synthetic domain.

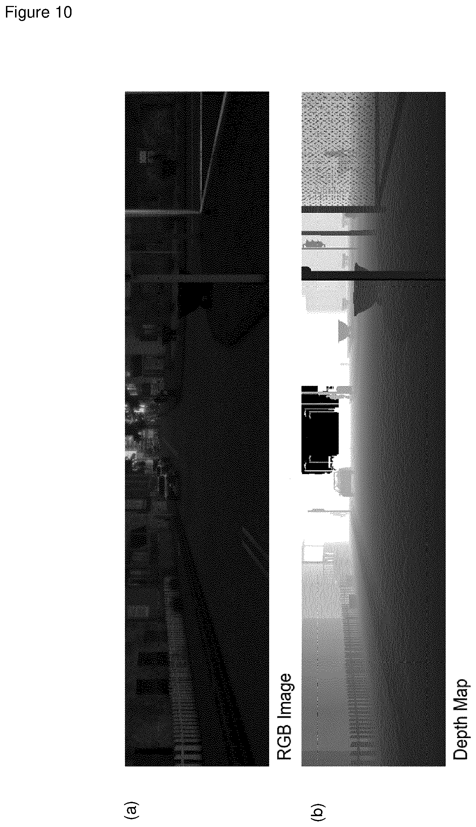

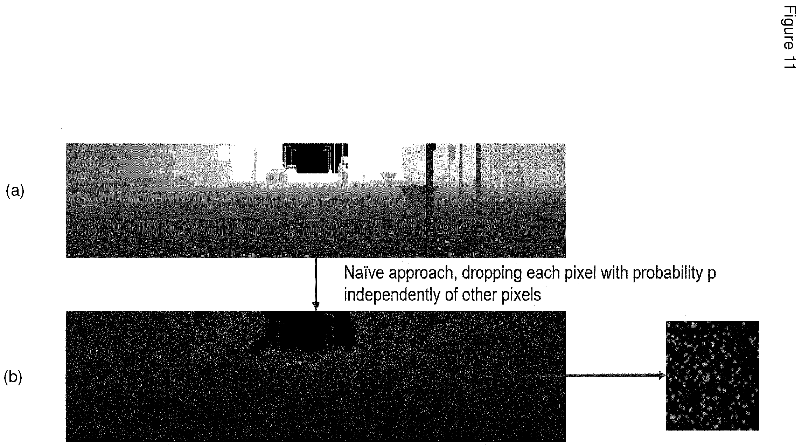

As a first step, towards simulating the LiDAR pattern, we retrieve a depth map on the virtual LiDAR reference as illustrated in Figure 10. Figure 10 shows a synthesized RGB and depth map. The top image illustrates a scene in the simulator for which an RGB image has been rendered. The lower image colour-codes (brighter is farther) the depth map of the same scene seen from the LiDAR frame of reference. In order to sparsify the input depth map, sensor imitation is used. While a Bernoulli sampling as proposed by Ma, Fangchang, and Sertac Karaman. "Sparse-to-dense: Depth prediction from sparse depth samples and a single image." 2018 IEEE International Conference on Robotics and Automation. ICRA 2018 and illustrated in Figure 11 provides sparse data with a different appearance than on the real domain, we use LiDAR masks from the real domain and learn RGB-conditioned point dropping to produce realistically looking LiDAR data as shown in Figure 4.

Figure 11 shows depth sparsification with Bernoulli point dropping. The depth map illustrated on top (brighter is farther) is sparsified with random point dropping. The illustration (lower image left) shows the result if the probability distribution for random dropping is a Bernoulli distribution. The enlarged region (lower right) illustrates the result of this context-independent point dropping for a smaller region.

### Virtual Projections

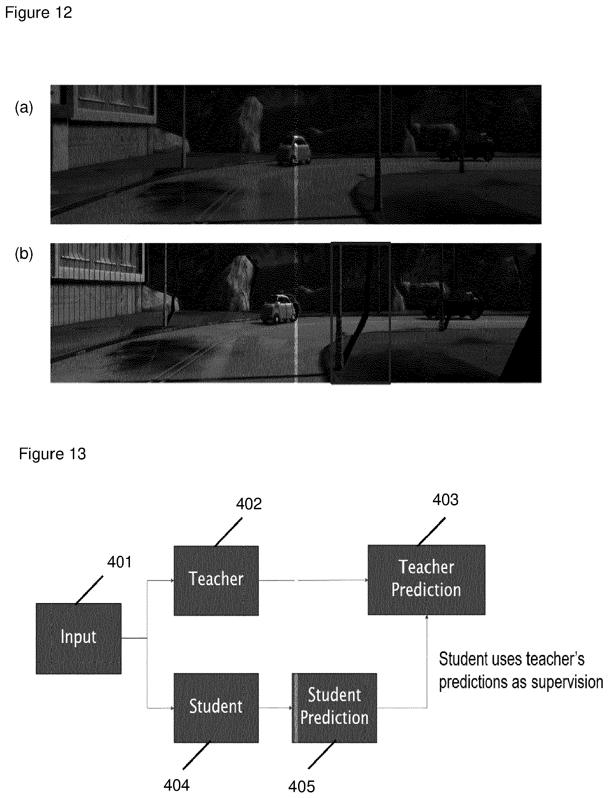

The virtual projection of RGB images from left to right makes it easier to notice depth estimation errors. A projection from a synthetic left RGB image to the right view with ground truth depth is depicted in Figure 12. While the line-of-sight occlusions are visible, the colour placing is correct whereas the same process with incorrectly estimated depth induces obvious artefact as shown in Figure 7. This is used with an adversarial loss on the warped image and identifies failure cases to update network parameters during training.

### Semi-supervised Consistency

There are different ways to realize semi-supervision. We implement a teacher-student model to provide a pseudo dense supervision on the real domain that uses weight-averaged consistency targets to improve the network output. In our realization, a mean-teacher (see Tarvainen, Antti, and Harri Valpola. "Mean teachers are better role models: Weight-averaged consistency targets improve semi-supervised deep learning results." NeurIPS 2017) is used to improve the predictions with a noisy pseudo-ensembled pulling of a student prediction. The process architecture is illustrated in Figure 13 where two copies of the same network (teacher and student) are used during training. Figure 13 shows a student-teacher training scheme. An input is fed to two copies of the same network, namely teacher and student. For each of the branches, different augmentations and noise are added. The teacher creates a pseudo supervision signal to train the student and an exponentially moving average of the student weights is used to update the teacher parameters during training. At each training step, the same minibatch is fed to both models with different augmentations and separately added noise. While the student weights are updated in the normal way, the teacher's weights are an exponentially moving average of the student weights to make the prediction consistent across iterations. In this way, the teacher is updated a small step in the direction of the student. After the training phase, the teacher's pseudo labels are not needed anymore and the student network is applied to estimate dense depth.

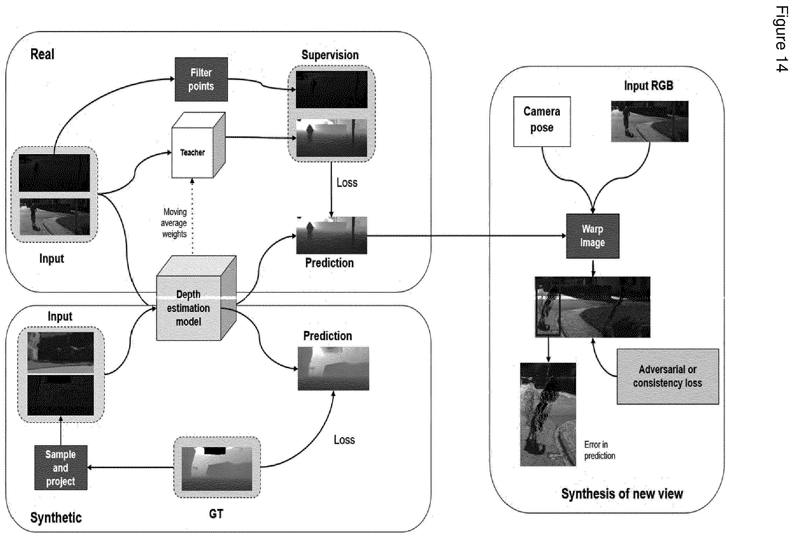

The whole pipeline including all mentioned domains and modules is illustrated in the overview Figure 14.

Figure 14 shows a domain adaptation pipeline. The three boxes illustrate the synthetic and real domain as well as the synthetically created new views. On the synthetic domain (lower left box), sensor imitation is used to create an input signal pair of RGB and LiDAR from the rendered full ground truth (GT) depth map. The depth estimation model is supervised by the ground truth and shared with the real domain where the input is RGB and LiDAR, too. The points are filtered on the real domain (upper left box) to create an additional sparse signal from LiDAR for supervision. Semi-supervision is realized with the student-teacher model (the student in this graphic is depicted as depth estimation model) where the teacher network is used only during training time. A camera pose defines the differentiable warping of the input RGB image onto a new reference (e.g. the right view) where an adversarial or consistency loss can be applied to identify the errors in prediction and help updating the weights.

### Results and Comparison to other Pipelines

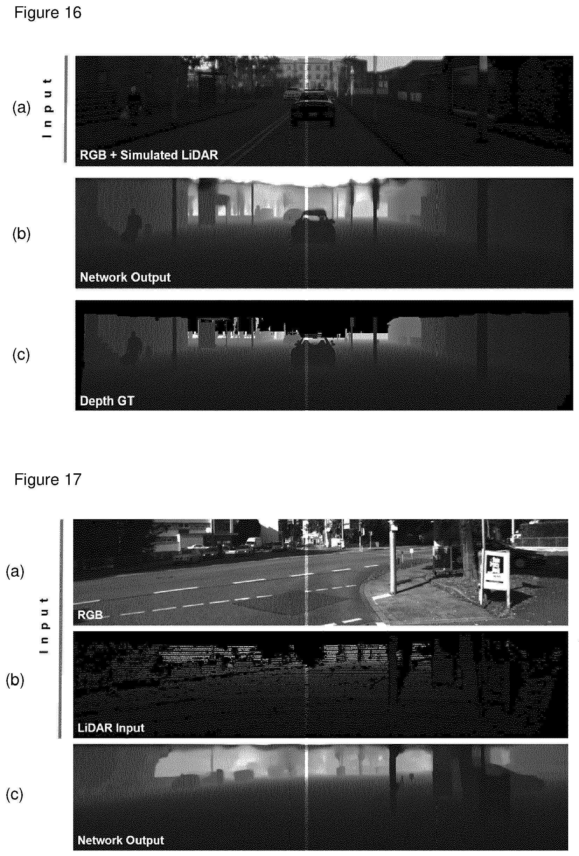

Qualitative results are shown for synthetic images in Figure 16 and for the real domain in Figure 17. Interestingly, the network outputs also plausible values in regions where there is no depth information present on the ground truth in the simulation case showing that the network has learned the generalization and completion induced by RGB information. A similar effect can be viewed on the real domain where the areas that do not include LiDAR data are also predicted accurately with plausible information.

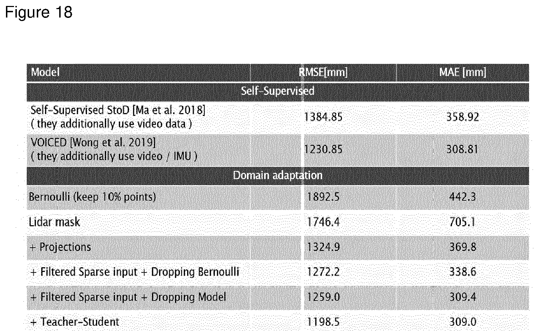

Figure 18 illustrates a quantitative analysis with an ablation study of the different modules where the method is compared to state-of-the-art self-supervised methods. By adding the different modules consecutively, one can see an improvement in each step which supports the proposition that each part is helping with the task of depth completion. A system that used only some of the parts would be possible, but would be expected to be less effective. The error evaluation also shows that the presented approach is on par with modern self-supervised methods, even though they use additional sensor information from a second virtual camera (see Ma, Fangchang, Guilherme Venturelli Cavalheiro, and Sertac Karaman. "*Self-supervised sparse-to-dense: Self-supervised depth completion from lidar and monocular camera.*" International Conference on Robotics and Automation. ICRA 2019) and another modality [Wong, Alex, Xiaohan Fei, and Stefano Soatto. "*VOICED: Depth Completion from Inertial Odometry and Vision.*" arXiv preprint arXiv:1905.08616. 2019].

Figure 17 shows results in the real domain. The top image shows the RGB input, the middle image the sparse LiDAR signal projected onto the RGB reference and the lower image shows the network output. It can be seen that thin structures are retrieved accurately and the depth completion fills holes between the relatively sparse LiDAR points as well as line-of-sight occlusions (e.g. around the pole in the right centre) and provides depth estimates for distant objects where there is only RGB information present. Also dark areas such as the car to the right are filled with plausible depth values in the absence of LiDAR information.

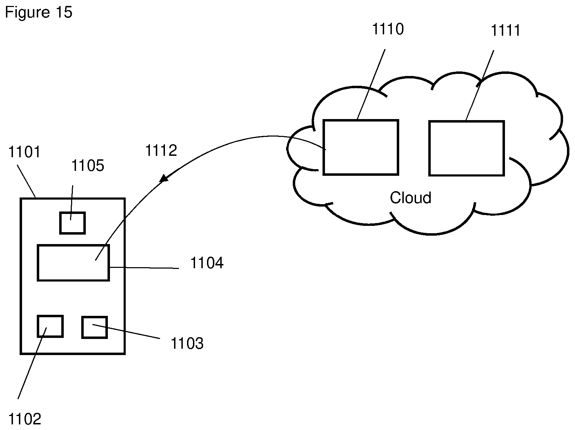

Figure 15 shows an example of a camera configured to implement the image processor to process images taken by an image sensor 1102 in the camera 1101. Such a camera 1101 typically includes some onboard processing capability. This could be provided by the processor 1104. The processor 1104 could also be used for the essential functions of the device. The camera typically also comprises a memory 1103.

The transceiver 1105 is capable of communicating over a network with other entities 1110, 1111. Those entities may be physically remote from the camera 1101. The network may be a publicly accessible network such as the internet. The entities 1110, 1111 may be based in the cloud. In one example, entity 1110 is a computing entity and entity 1111 is a command and control entity. These entities are logical entities. In practice they may each be provided by one or more physical devices such as servers and datastores, and the functions of two or more of the entities may be provided by a single physical device. Each physical device implementing an entity comprises a processor and a memory. The devices may also comprise a transceiver for transmitting and receiving data to and from the transceiver 1105 of camera 1101. The memory stores in a non-transient way code that is executable by the processor to implement the respective entity in the manner described herein.

The command and control entity 1111 may train the artificial intelligence models used in each module of the system. This is typically a computationally intensive task, even though the resulting model may be efficiently described, so it may be efficient for the development of the algorithm to be performed in the cloud, where it can be anticipated that significant energy and computing resource is available. It can be anticipated that this is more efficient than forming such a model at a typical camera.

In one implementation, once the deep learning algorithms have been developed in the cloud, the command and control entity can automatically form a corresponding model and cause it to be transmitted to the relevant camera device. In this example, the system is implemented at the camera 1101 by processor 1104.

In another possible implementation, an image may be captured by the camera sensor 1102 and the image data may be sent by the transceiver 1105 to the cloud for processing in the system. The resulting target image could then be sent back to the camera 1101, as shown at 1112 in Figure 15.

The method may be deployed in multiple ways, for example in the cloud, on the device, or alternatively in dedicated hardware. As indicated above, the cloud facility could perform training to develop new algorithms or refine existing ones. Depending on the compute capability near to the data corpus, the training could either be undertaken close to the source data, or could be undertaken in the cloud, e.g. using an inference engine. The system may also be implemented at the camera, in a dedicated piece of hardware, or in the cloud.

A vehicle may be equipped with a processor programmed to implement a model trained as discussed above. The model may take inputs from image and depth sensors carried by the vehicle, and may output a denser depth map. That denser depth map may be used as input to a self-driving or collision avoidance system for controlling the vehicle.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present disclosure may consist of any such individual feature or combination of features. In view of the foregoing description it will be evident to a person skilled in the art that various modifications may be made within the scope of the disclosure.

## Claims

1. A computer-implemented method for training an environmental analysis machine learning system, the method comprising:
receiving a synthetic data model of an environment:
forming in dependence on the data model a first training input comprising a visual stream representing the environment as viewed from a plurality of locations;
forming in dependence on the data model a second training input comprising a depth stream representing the depth of objects in the environment relative to the plurality of locations;
forming a third training input comprising a depth stream representing the depth of objects in the environment relative to the plurality of locations, the third training input being sparser than the second training input; and
estimating by means of the analysis system, in dependence on the first and third training inputs, a series of depths at less sparsity then the third training input; and
adapting the analysis system in dependence on a comparison between the estimated series of depths and the second training input;
wherein the second training input and the third training input represent depth maps; and
**characterised in that** the third training input is filtered by excluding data for vectors along which depth data is provided in dependence on the colour represented in the visual stream of an object towards which the respective vectors extend.

2. A method as claimed in claim 1, wherein the analysis system is a machine learning system having a series of weights and the step of adapting the analysis system comprises adapting the weights.

3. A method as claimed in claim 1 or 2, wherein the third training input is filtered to simulate data resulting from a physical depth sensor.

4. A method as claimed in claim 3, wherein the third training input is filtered to simulate data resulting from a scanning depth sensor.

5. A method as claimed in any preceding claim, wherein the third training input is augmented by adding noise.

6. A method as claimed in any preceding claim, comprising forming the third training input by filtering the second training input.

7. A method as claimed in any preceding claim, wherein the third training input is augmented to preferentially include, for each of the plurality of locations, depth data for vectors extending at a common angle to vertical from the respective location.

8. A method as claimed in any preceding claim, wherein the third training input is filtered by preferentially excluding data for vectors that extend from one of the locations to an object that has been determined to be at a greater or smaller depth further away from an estimate than a predetermined threshold.

9. A method as claimed in any preceding claim, the method comprising repeatedly adapting the analysis system and wherein the method comprises performing the majority of such adaptations in dependence on data describing one or more synthetic environments.

10. A method as claimed in any preceding claim, comprising training the system by the steps of:
providing a view of the environment orientationally and translationally centred on a first reference frame as input to the system and in response to that input estimating by means of the system the depths associated with pixels in that view;
forming, in dependence on that view and the estimated depths, an estimated view of the environment orientationally and translationally centred on a second reference frame different from the first reference frame;
estimating the visual plausibility of the estimated view; and
adjusting the system in dependence on that estimate.

11. An environmental analysis machine learning system trained based on a synthetic data model by a method as claimed in any of claims 1 to 10.

12. An environmental analysis device comprising:
an image sensor for sensing images of an environment;
a time of flight depth sensor; and
an environmental analysis system as claimed in claim 11;
the environmental analysis system being arranged to receive images sensed by the image sensor and depths sensed by the depth sensor and thereby form estimates of the depths of objects depicted in the images.

## Patentansprüche

1. Computer-implementiertes Verfahren zum Trainieren eines maschinellen Lernsystems für Umweltanalysen, wobei das Verfahren umfasst:
Empfangen eines synthetischen Datenmodells einer Umgebung;
Ausbilden, in Abhängigkeit von dem Datenmodell, einer ersten Trainingseingabe, die einen visuellen Stream, der die Umgebung darstellt, wie sie von einer Vielzahl von Orten aus betrachtet wird, umfasst;
Ausbilden, in Abhängigkeit von dem Datenmodell, einer zweiten Trainingseingabe, die einen tiefen Stream, der die Tiefe von Objekten in der Umgebung relativ zu der Vielzahl von Orten darstellt, umfasst;
Ausbilden einer dritten Trainingseingabe, die einen tiefen Stream, der die Tiefe von Objekten in der Umgebung relativ zu der Vielzahl von Orten darstellt, umfasst, wobei die dritte Trainingseingabe spärlicher als die zweite Trainingseingabe ist; und
Schätzen, mittels des Analysesystems, in Abhängigkeit von der ersten und der dritten Trainingseingabe, einer Reihe von Tiefen bei geringerer Spärlichkeit als die dritte Trainingseingabe; und
Anpassen des Analysesystems in Abhängigkeit von einem Vergleich zwischen der geschätzten Reihe von Tiefen und der zweiten Trainingseingabe;
wobei die zweite Trainingseingabe und die dritte Trainingseingabe Tiefenkarten darstellen; und
**dadurch gekennzeichnet, dass** die dritte Trainingseingabe gefiltert wird, durch Ausschließen von Daten für Vektoren, entlang derer Tiefendaten in Abhängigkeit von der Farbe bereitgestellt werden, die in dem visuellen Stream eines Objekts dargestellt ist, zu dem sich die jeweiligen Vektoren erstrecken.

2. Verfahren nach Anspruch 1, wobei das Analysesystem ein maschinelles Lernsystem ist, das eine Reihe von Gewichtungen aufweist, und der Schritt des Anpassens des Analysesystems das Anpassen der Gewichtungen umfasst.

3. Verfahren nach Anspruch 1 oder 2, wobei die dritte Trainingseingabe gefiltert wird, um Daten zu simulieren, die von einem physischen Tiefensensor stammen.

4. Verfahren nach Anspruch 3, wobei die dritte Trainingseingabe gefiltert wird, um Daten zu simulieren, die von einem Scanning-Tiefensensor stammen.

5. Verfahren nach einem der vorstehenden Ansprüche, wobei die dritte Trainingseingabe durch Hinzufügen von Rauschen erweitert wird.

6. Verfahren nach einem der vorstehenden Ansprüche, das das Ausbilden der dritten Trainingseingabe durch Filtern der zweiten Trainingseingabe umfasst.

7. Verfahren nach einem der vorstehenden Ansprüche, wobei die dritte Trainingseingabe erweitert wird, um bevorzugt für jeden der Vielzahl von Orten Tiefendaten für Vektoren einzuschließen, die sich in einem gemeinsamen Winkel zu einer Vertikalen von dem jeweiligen Ort erstrecken.

8. Verfahren nach einem der vorstehenden Ansprüche, wobei die dritte Trainingseingabe gefiltert wird, durch vorzugsweise Ausschließen von Daten für Vektoren, die sich von einem der Orte zu einem Objekt erstrecken, das bestimmt wurde, in einer größeren oder kleineren Tiefe weiter entfernt von einer Schätzung als ein vorbestimmter Schwellenwert zu sein.

9. Verfahren nach einem der vorstehenden Ansprüche, wobei das Verfahren wiederholtes Anpassen des Analysesystems umfasst und wobei das Verfahren ein Durchführen der Mehrzahl solcher Anpassungen in Abhängigkeit von Daten, die eine oder mehrere synthetische Umgebungen beschreiben, umfasst.

10. Verfahren nach einem der vorstehenden Ansprüche, das das Trainieren des Systems durch die Schritte umfasst:
Bereitstellen einer Ansicht der Umgebung, die orientierungs- und translationsmäßig auf einem ersten Referenzrahmen zentriert ist, als Eingabe in das System und als Reaktion auf diese Eingabe Schätzen, mittels des Systems, der Tiefen, die Pixeln in dieser Ansicht zugeordnet sind;
Ausbilden, in Abhängigkeit von dieser Ansicht und den geschätzten Tiefen, einer geschätzten Ansicht der Umgebung, die orientierungs- und translationsmäßig auf einem zweiten Referenzrahmen zentriert ist, der sich von dem ersten Referenzrahmen unterscheidet;
Schätzen der visuellen Plausibilität der geschätzten Ansicht; und
Einstellen des Systems in Abhängigkeit von dieser Schätzung.

11. Maschinelles Lernsystem für Umweltanalysen, das basierend auf einem synthetischen Datenmodell durch ein Verfahren nach einem der Ansprüche 1 bis 10 trainiert wurde.

12. Umweltanalysevorrichtung, die umfasst:
einen Bildsensor zum Erfassen von Bildern einer Umgebung;
einen Laufzeittiefensensor; und
ein Umweltanalysesystem nach Anspruch 11;
wobei das Umgebungsanalysesystem angeordnet ist, um durch den Bildsensor erfasste Bilder und durch den Tiefensensor erfasste Tiefen zu empfangen und dadurch Schätzungen der Tiefen von in den Bildern dargestellten Objekten auszubilden.

## Revendications

1. Procédé mis en oeuvre par ordinateur permettant d'entraîner un système d'apprentissage automatique d'analyse environnementale, le procédé comprenant :
la réception d'un modèle de données synthétiques d'un environnement :
la formation, en fonction du modèle de données, d'une première entrée d'entraînement comprenant un flux visuel représentant l'environnement tel qu'il est vu depuis une pluralité d'emplacements ;
la formation, en fonction du modèle de données, d'une deuxième entrée d'entraînement comprenant un flux de profondeur représentant la profondeur d'objets dans l'environnement par rapport à la pluralité d'emplacements ;
la formation d'une troisième entrée d'entraînement comprenant un flux de profondeur représentant la profondeur d'objets dans l'environnement par rapport à la pluralité d'emplacements, la troisième entrée d'entraînement étant plus éparse que la deuxième entrée d'entraînement ; et
l'estimation, au moyen du système d'analyse, en fonction des première et troisième entrées d'entraînement, d'une série de profondeurs moins éparse que la troisième entrée d'entraînement ; et
l'adaptation du système d'analyse en fonction d'une comparaison entre la série estimée de profondeurs et la deuxième entrée d'entraînement ;
dans lequel la deuxième entrée d'entraînement et la troisième entrée d'entraînement représentent des cartes de profondeur ; et
**caractérisé en ce que** la troisième entrée d'entraînement est filtrée par exclusion de données pour des vecteurs le long desquels des données de profondeur sont fournies en fonction de la couleur représentée dans le flux visuel d'un objet vers lequel les vecteurs respectifs s'étendent.

2. Procédé selon la revendication 1, dans lequel le système d'analyse est un système d'apprentissage automatique ayant une série de pondérations et l'étape d'adaptation du système d'analyse comprend l'adaptation des pondérations.

3. Procédé selon la revendication 1 ou 2, dans lequel la troisième entrée d'entraînement est filtrée pour simuler des données résultant d'un capteur de profondeur physique.

4. Procédé selon la revendication 3, dans lequel la troisième entrée d'entraînement est filtrée pour simuler des données résultant d'un capteur de profondeur à balayage.

5. Procédé selon l'une quelconque revendication précédente, dans lequel la troisième entrée d'entraînement est augmentée par ajout de bruit.

6. Procédé selon l'une quelconque revendication précédente, comprenant la formation de la troisième entrée d'entraînement par filtrage de la deuxième entrée d'entraînement.

7. Procédé selon l'une quelconque revendication précédente, dans lequel la troisième entrée d'entraînement est augmentée pour comporter, de préférence, pour chacun de la pluralité d'emplacements, des données de profondeur pour des vecteurs s'étendant à un angle commun par rapport à la verticale à partir de l'emplacement respectif.

8. Procédé selon l'une quelconque revendication précédente, dans lequel la troisième entrée d'entraînement est filtrée par exclusion, de préférence, de données pour des vecteurs qui s'étendent de l'un des emplacements à un objet qui a été déterminé comme étant à une profondeur plus grande ou plus petite, plus éloignée d'une estimation qu'un seuil prédéterminé.

9. Procédé selon l'une quelconque revendication précédente, le procédé comprenant l'adaptation répétée du système d'analyse et dans lequel le procédé comprend la réalisation de la majorité de telles adaptations en fonction de données décrivant un ou plusieurs environnements synthétiques.

10. Procédé selon l'une quelconque revendication précédente, comprenant l'entraînement du système par les étapes consistant à :
fournir une vue de l'environnement centré, en orientation et en translation, sur une première trame de référence en tant qu'entrée du système et, en réponse à cette entrée, estimer, au moyen du système, les profondeurs associées à des pixels dans ladite vue ;
former, en fonction de ladite vue et des profondeurs estimées, une vue estimée de l'environnement centré, en orientation et en translation, sur une seconde trame de référence différente de la première trame de référence ;
estimer la plausibilité visuelle de la vue estimée ; et
ajuster le système en fonction de ladite estimation.

11. Système d'apprentissage automatique d'analyse environnementale entraîné sur la base d'un modèle de données synthétiques par un procédé selon l'une quelconque des revendications 1 à 10.

12. Dispositif d'analyse environnementale comprenant :
un capteur d'image pour détecter des images d'un environnement ;
un capteur de profondeur de temps de vol ; et
un système d'analyse environnementale selon la revendication 11 ;
le système d'analyse environnementale étant conçu pour recevoir des images détectées par le capteur d'image et des profondeurs détectées par le capteur de profondeur et former ainsi des estimations des profondeurs d'objets représentés dans les images.
